# EUROPEAN PATENT APPLICATION

(11) **EP 0 561 180 A2**
(43) Date of publication of application: **22.09.1993**
(21) Application number: 93102783.3
(22) Date of filing: 23.02.1993
(51) Int. Cl.: H04Q 3/62, H04M 3/50, H04M 3/42

(54) **Recording two or more party conversations**

(30) Priority: 02.03.1992 US 846458
(71) Applicant: ROLM COMPANY, Santa Clara, CA 95052 (US)
(72) Inventor: Tatum, Todd C., Santa Clara , CA 95051 (US)
(74) Representative: Fuchs, Franz-Josef, Dr.-Ing.

(57) **Abstract**

Method and apparatus for providing a capability for recording two or more party conversations in connection with a voice messaging system. In accordance with the present invention, a user can record any telephone conversation between two or more parties that is originated or received by the user's telephone extension.

## Description

### Technical Field of the Invention

The present invention relates to method and apparatus for recording two or more party conversations utilizing a voice messaging system (VMS).

### Background of the Invention

Voice messaging systems (VMSs) which are presently available in the prior art provide a user a capability of recording and sending messages and/or of processing received messages. In addition, products which are presently available in the prior art provide a user a capability of recording conversations in progress. However, there is no present product which provides a capability of recording conversations in progress in a voice messaging system.

As such, there is a need in the art for a method and apparatus to provide a capability for recording two or more party conversations in connection with a voice messaging system. Such method and apparatus would advantageously enhance the result of recording by providing the user with the full panoply of capabilities of the voice messaging system such as, for example and without limitation, deleting, saving, forwarding, commenting on, and replaying the conversation.

### Summary of the Invention

Embodiments of the present invention advantageously satisfy the above-described need in the prior art by providing a capability for recording two or more party conversations in connection with a voice messaging system (VMS). Such method and apparatus advantageously enhance the result of recording by providing the user with the full panoply of capabilities of the voice messaging system such as, for example and without limitation, deleting, saving, forwarding, commenting on, and replaying the conversation.

One embodiment of the inventive method for recording a two or more party conversation in connection with a voice messaging system comprises the steps of: placing a call to at least one party; placing a conference call to the voice messaging system; requesting the voice messaging system to record at least a portion of a conversation among the parties; and the voice messaging system recording the at least a portion of the conversation. Another embodiment of the inventive method for recording a two or more party conversation in connection with a voice messaging system comprises the steps of: placing a call to a voice messaging system; placing a conference call to at least one party; requesting the voice messaging system to record at least a portion of a conversation among the parties; and the voice messaging system recording the at least a portion of the conversation.

The invention will be better understood from the following more detailed description taken with the accompanying drawings and claims.

### Brief Description of the Drawings

FIG. 1 shows an arrangement among a voice messaging system (VMS) and telephones which is utilized in carrying out the method of the present invention and
FIG. 2 shows an interface between a VMS and telephones which helps to illustrate the manner in which a connection is made among the VMS and the telephones so that a multiparty conversation can be recorded.

Corresponding elements in each of the drawings have the same reference numbers.

### Detailed Description

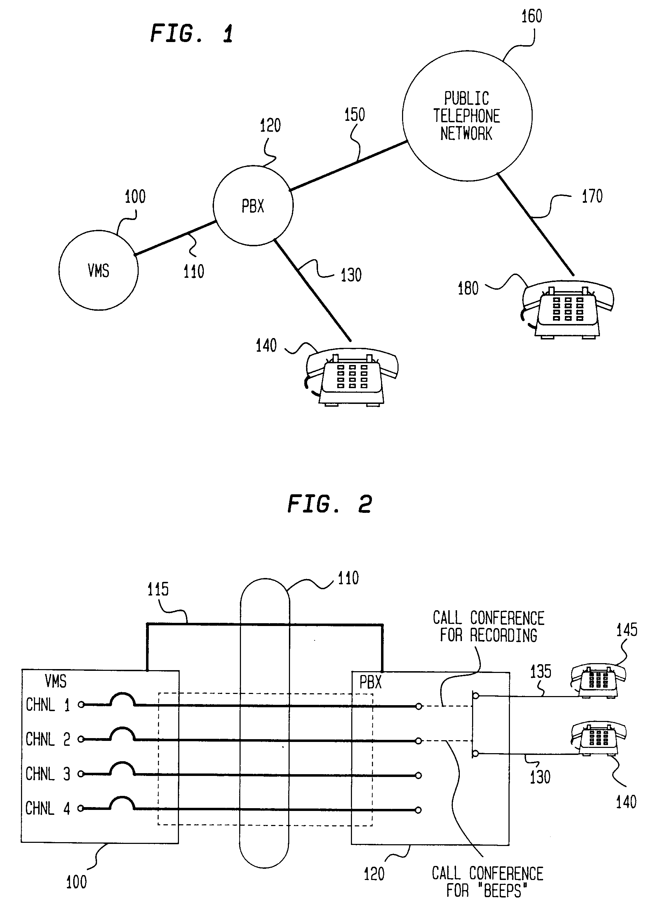

FIG. 1 shows voice messaging system (VMS) 100 which is connected to private business exchange (PBX) 120 by means of interconnection line 110. PBX 120 is directly connected to local telephone 140 by means of interconnection line 130. In addition, as also shown in FIG. 1, PBX 120 interfaces to public telephone network 160 by means of trunk 150 and telephone 180 interfaces with public telephone network 160 by means of line 170. In the preferred embodiment of the present invention, PBX 120 is a ROLM Systems CBX 9751 manufactured by ROLM Systems of Santa Clara, California and VMS 100 is a ROLM Systems PhoneMail system also manufactured by ROLM Systems of Santa Clara, California which will be modified as described below to provide the method and apparatus of the present invention. In the preferred embodiment, a Rolm Telephony Application Protocol (TAP) provides call processing over interconnection line 110 between PBX 120 and VMS 100 for handling calls received from telephones 140 and 180. In addition, in the preferred embodiment, interconnection line 130 is a ROLMLink two-wire connection and TAP provides call processing over interconnection line 130. The manner in which call processing is carried out between telephone 140 and PBX 120; between public telephone network 160 and telephone 180; and between PBX 120 and public telephone network 160 is well known to those of ordinary skill in the art.

As is well known to those of ordinary skill in the art, VMS 100 may receive input from a user by means of responses to requests, for example, voice prompts. In the most common application of VMS 100, such responses occur in the form of presses of a touchtone pad associated with a telephone. The responses are utilized to direct the activity of VMS 100. As is further known to those of ordinary skill in the art, VMS 100 may interact with a user by sending signals to the user's telephone to create an interaction. For example, consider the case of telephone 140, a local telephone, being a ROLMPhone. A ROLMPhone has the capability of transmitting and receiving data as well as voice over interconnection line 130 which is, in the preferred embodiment, a ROLMLink two-wire connection which is well known in the art. In such an instance, information may be transmitted between telephone 140 and VMS 100 by means of presses of a predetermined function key; by means of a predetermined sequence of pad presses; by means of a response to a prompt issued from VMS 100 in a manner which is well known to those of ordinary skill in the art; or by means of speech responses to a prompt issued from VMS 100. In the last option, speech responses would be received and interpreted by speech recognition equipment which is added to VMS 100, such speech recognition equipment being apparatus which is well known to those of ordinary skill in the art.

In accordance with one embodiment of the present invention, a user at telephone 140 places a telephone call to VMS 100 and logs onto VMS 100 and his/her personal mailbox by providing identification and/or passwords in a manner which is well known to those of ordinary skill in the art. Then, either in response to a prompt or by pressing a predetermined set of functions keys and so forth, the user places a call to telephone 180. After the call is answered, the user conferences VMS 100 in on the call. Of course, those of ordinary skill in the art understand that the placement of the telephone call to telephone 180 may be performed by VMS 100 in a manner which is well known to those of ordinary skill in the art. Then, after all parties are connected, the user will enable subsequent recording of the multiparty conversation, when desired, by, for example, pressing a button located on telephone 140 either during or before the telephone conversation. The conversation is then recorded for as long as the feature is enabled. As those of ordinary skill in the art will readily appreciate, the recording may be suspended by the user's sending a "stop" indication by any of the means set forth above for use in initiating the recording. In one embodiment of the present invention, an appropriately labeled red light may be lit continuously to indicate that the call is being recorded, the light being flashed to indicate that the recording is in progress. Then, when the recording has terminated, the user can be notified by VMS 100 automatically by, for example, voice prompt, that the recorded conversation is accessible through VMS 100.

Once the conversation is recorded at VMS 100, a user may advantageously access the recorded conversation and process the recorded conversation in one or more of the following options which are provided by VMS 100 in a manner which is well known to those of ordinary skill in the art: (a) delete the conversation; (b) save the conversation for later reference; (c) forward the conversation to another user of VMS 100; (d) replay the conversation; (e) record a comment which is placed at the beginning of the conversation before forwarding or saving the message; and so forth.

In addition, in accordance with a preferred embodiment of the present invention, VMS 100 can generate a voice message time and date stamp and place it at the beginning of the recorded conversation. Lastly, in accordance with a further embodiment of the present invention, VMS 100 can be made to provide the capability of transferring the recording to another medium such as, for example, tape that can be played on any cassette player.

FIG. 2 shows an interface between VMS 100 and telephones 140 and 145 which helps to illustrate the manner in which a connection is made among VMS 100 and telephones 140 and 145 so that a multiparty conversation can be recorded. This illustrates an embodiment wherein two parties are having a conversation and then, in the middle of the conversation, one of the parties wishes to record a portion thereof by conferencing in a VMS. This occurs as follows with reference to FIG. 2. First, one party at telephone 140 places a telephone call to another party at telephone 145. As shown in FIG. 2, both parties are connected to PBX 120. During the conversation, either party presses a function key or provides a specific series of keypad presses on the touchtone pad of either telephone 140 or telephone 145. The signals generated by the function key press or by the sequence of keypad presses are transmitted to PBX 120 over interconnection line 130 or 135, respectively; in the preferred embodiment, interconnection lines 130 and 135 are a ROLMLink two-wire connection which can transmit data as well as voice and telephones 140 and 145 are ROLMPhones. The signals are received by an application program within PBX 120; in the preferred embodiment this is a ROLM Systems CBX. The applications program in PBX 120 recognizes the signal generated by the feature key press or the DTMF tone sequences emitted from either of ROLMPhones 140 or 145. In response, the applications program in PBX 120 sends a message to VMS 100 over TAP link 115. The message informs VMS 100 of the extension of the telephone which is requesting the recording. In response, VMS 100 opens a channel, for example, channel 1, to PBX 120 over the appropriate link of interconnection line 110 in a manner which is well known to those of ordinary skill in the art. Then, VMS 100 requests call conferencing on the connection between telephones 140 and 145. As one can readily appreciate, at this point, VMS 100 becomes a third party on a conference call. Next, VMS 100 plays a prompt to indicate that recording of the conversation between the parties at telephones 140 and 145 will begin, for example, at a "beep." Next, VMS 100 plays beep and begins recording the conversation.

If any legal requirements exist that tones, for example, beeps, be played during the recording, VMS 100 would open a second channel, for example, channel 2, and a request would be made to PBX 120 to have that channel conferenced as a fourth party. The fourth party conference channel would be utilized to play any required tones at required intervals.

Recording by VMS 100 may be terminated in any one of a number of ways. For example, recording may be terminated by reason of the connection between telephones 140 and 145 being broken; which event is reported to VMS 100 by PBX 120 over link 115. In another way, the party that initiated the recording may, for example, press a feature key or a predetermined sequence of touchtone pads. The signal(s) generated in response thereto would be transmitted to an applications program within PBX 120. In response, the applications program would send a message over TAP link 115 to VMS 100. Then, VMS 100 would close the channels which were opened to enable the recording. In such an embodiment, the connection between telephones 140 and 145 would remain in tact as long as neither of the parties disconnects. After the recording has ended, VMS 100 sends the recording to the appropriate mailbox in the same manner in which messages are normally stored therein.

It is to be appreciated and understood that the specific embodiments of the invention described hereinbefore are merely illustrative of the general principles of the invention. Various modifications may be made by those skilled in the art consistent with the principles set forth hereinbefore.

## Claims

1. Method for recording a two or more party conversation in connection with a voice messaging system which method comprises the steps of:
placing a call to at least one party;
placing a conference call to the voice messaging system;
requesting the voice messaging system to record at least a portion of a conversation among the parties; and
the voice messaging system recording the at least a portion of the conversation.

2. The method of claim 1 which further comprises the step of requesting the voice messaging system to cease recording.

3. Method for recording a two or more party conversation in connection with a voice messaging system which method comprises the steps of:
placing a call to a voice messaging system;
placing a conference call to at least one party;
requesting the voice messaging system to record at least a portion of a conversation among the parties; and
the voice messaging system recording the at least a portion of the conversation.

4. The method of claim 3 which further comprises the step of requesting the voice messaging system to cease recording.

5. The method of claim 1 which further comprises the step of storing a time and date with the recording.

6. The method of claim 3 which further comprises the step of storing a time and date with the recording.

7. The method of claim 1 which further comprises the step of providing an indication that recording is occurring.

8. The method of claim 3 which further comprises the step of providing an indication that recording is occurring.
